# EUROPEAN PATENT APPLICATION

(11) **EP 2 698 691 A2**
(43) Date of publication of application: **19.02.2014**
(21) Application number: 13180385.0
(22) Date of filing: 14.08.2013
(51) Int. Cl.: G06F 3/044

(54) **Touch panel and touch display panel**

(30) Priority: 15.08.2012 TW 101129476; 03.06.2013 TW 102210411 U; 12.07.2013 CN 201320416397 U
(71) Applicant: Wintek Corporation, 42760 Taichung City (TW)
(72) Inventor: Huang, Hieng-Hsiung, 300 Hsinchu City (TW); Wang, Wen-Chun, 407 Taichung City (TW); Liu, Chin-Chang, 427 Taichung City (TW)
(74) Representative: Becker Kurig Straus

(57) **Abstract**

A touch panel (1) includes a first substrate (11), a second substrate (12), an adhesive layer (13), a first patterned sensing electrode layer (21) and a second patterned sensing electrode layer (22). The first substrate (11) has a first surface (11A) and a second surface (11B), the second substrate (12) has a third surface (12C) and a fourth surface (12D), and the second surface (11B) of the first substrate (11) faces the third surface (12C) of the second substrate (12). The adhesive layer (13) is disposed between the second surface (11B) of the first substrate (11) and the third surface (12C) of the second substrate (12) for assembling the first substrate (11) and the second substrate (12). The first patterned sensing electrode layer (21) is disposed on the first substrate (11), and the second patterned sensing electrode layer (22) is disposed on the second substrate (12).

## Description

### Field of the Invention

The present invention relates to a touch panel and a touch display panel, and particularly to a thin type touch panel and a touch display panel including a thin type glass substrate according to the claims here below.

### Background of the Invention

In present consumer electronics, touch panels have been widely utilized in portable electronic products, such as smart phone, digital camera, global positioning systems (GPS), and tablet PC. This is in place of traditional input devices, such as keyboard and mouse, as the data communicational interface between human and the electronic devices, for minimizing the volume of the devices. However, conventional touch panels use two substrates each having a thickness of about 1 millimeter (mm) and are gradually unable to meet the market demand of thinner touch panels.

### Summary of the Invention

The present invention aims at providing a thin type touch panel and a touch display panel, whose whole thicknesses are smaller than conventional touch panels and touch display panels.

This is achieved by a touch panel and a touch display panel according to the claims here below. The dependent claims pertain to corresponding further developments and improvements.

As will be seen more clearly from the detailed description following below, the claimed touch panel includes a first substrate, a second substrate, an adhesive layer, a first patterned sensing electrode layer and a second patterned sensing electrode layer. The first substrate has a first surface and a second surface. The second substrate has a third surface and a fourth surface. The second surface of the first substrate faces the third surface of the second substrate. The adhesive layer is disposed between the second surface of the first substrate and the third surface of the second substrate to bond the first substrate and the second substrate. The first patterned sensing electrode layer is disposed on the first surface of the first substrate. The second patterned sensing electrode layer is disposed on the fourth surface of the second substrate.

As will be seen more clearly from the detailed description following below, the claimed touch display panel includes a touch panel, a display panel and a cover lens. The touch panel includes a first substrate, a second substrate, an adhesive layer, a first patterned sensing electrode layer and a second patterned sensing electrode layer. The first substrate has a first surface and a second surface. The second substrate has a third surface and a fourth surface. The second surface of the first substrate faces the third surface of the second substrate. The adhesive layer is disposed between the second surface of the first substrate and the third surface of the second substrate to bond the first substrate and the second substrate. The first patterned sensing electrode layer is disposed on the first surface of the first substrate. The second patterned sensing electrode layer is disposed on the fourth surface of the second substrate. The display panel faces the fourth surface of the second substrate. The cover lens is disposed on the first surface of the first substrate and covers the first patterned sensing electrode layer.

As will be seen more clearly from the detailed description following below, in one realization of the claimed touch panel at least one of the first substrate and the second substrate is a thin type glass substrate. Each of the thin type glass substrates has a thickness in a range of from 0.05 millimeters to 0.25 millimeters. The adhesive layer is disposed between the second surface of the first substrate and the third surface of the second substrate to bond the first substrate and the second substrate. The first patterned sensing electrode layer is disposed on the first substrate. The second patterned sensing electrode layer is disposed on the second substrate.

As will be seen more clearly from the detailed description following below, in one realization of the claimed touch display panel includes a touch panel and a display panel. The touch panel includes first substrate, a second substrate, an adhesive layer, a first patterned sensing electrode layer and a second patterned sensing electrode layer. The first substrate has a first surface and a second surface. The second substrate has a third surface and a fourth surface. The second surface of the first substrate faces the third surface of the second substrate. At least one of the first substrate and the second substrate is a thin type glass substrate. Each of the thin type glass substrates has a thickness in a range of from 0.05 millimeters to 0.25 millimeters. The adhesive layer is disposed between the second surface of the first substrate and the third surface of the second substrate to bond the first substrate and the second substrate. The first patterned sensing electrode layer is disposed on the first substrate. The second patterned sensing electrode layer is disposed on the second substrate. The adhesive layer is disposed between the first substrate and the display panel.

As will be seen more clearly from the detailed description following below, in one realization of the claimed touch panel includes substrate, a cover lens, an adhesive layer and a sensing element. The substrate has a first surface and a second surface. The substrate includes a thin type glass substrate. A thickness of the thin type glass substrate is in a range of from 0.05 millimeters to 0.25 millimeters. The cover lens is disposed on the first surface of the substrate. The adhesive layer is disposed between the first surface of the substrate and the cover lens to bond the substrate and the cover lens together. The sensing element is disposed on the substrate.

The structures of the claimed touch panel and the touch display panel according to the present invention provide small overall thicknesses so as to meet the market requirements for thinning the products. Furthermore, according to the structures of the present invention touch panel and touch display panel, the touch panel and the touch display panel have good optical properties, chemical resistance, and anti-scratch ability as compared with conventional products.

### Brief Description of the Drawings

In the following, the invention is further illustrated by way of example, taking reference to the accompanying drawings. Thereof
FIG. 1 is a schematic top view of a touch panel according to a first preferred embodiment of the present invention,
FIG. 2 is a schematic cross-sectional view taken along the line A-A' of FIG. 1,
FIG. 3 is a schematic diagram of a touch display panel according to the first preferred embodiment of the present invention,
FIG. 4 is a schematic diagram of a touch panel according to a second preferred embodiment of the present invention,
FIG. 5 is a schematic diagram of a touch display panel according to the second preferred embodiment of the present invention,
FIG. 6 is a schematic diagram of a touch display panel according to a modified embodiment of the second preferred embodiment of the present invention,
FIG. 7 is a schematic diagram of a touch panel according to a third preferred embodiment of the present invention,
FIG. 8 is a schematic diagram of a touch display panel according to the third preferred embodiment of the present invention,
FIG. 9 is a schematic diagram of a touch display panel according to a modified embodiment of the third preferred embodiment of the present invention,
FIG. 10 is a schematic diagram of the first patterned sensing electrode layer and the second patterned sensing electrode layer according to a modified embodiment of the present invention,
FIG. 11 is a schematic diagram of a touch panel according to a fourth preferred embodiment of the present invention,
FIG. 12 is a schematic diagram of a touch panel according to a modification of the fourth preferred embodiment of the present invention,
FIG. 13 is a schematic diagram of a touch panel according to another modification of the fourth preferred embodiment of the present invention,
FIG. 14 is a schematic diagram of a touch panel according to a fifth preferred embodiment of the present invention, and
FIG. 15 is a schematic diagram of a touch panel according to a sixth preferred embodiment of the present invention.

### Detailed Description

To provide a better understanding of the invention being disclosed, representative embodiments will be detailed as follows. The representative embodiments of the disclosure are illustrated in the accompanying drawings with numbered elements to elaborate the contents and effects to be achieved.

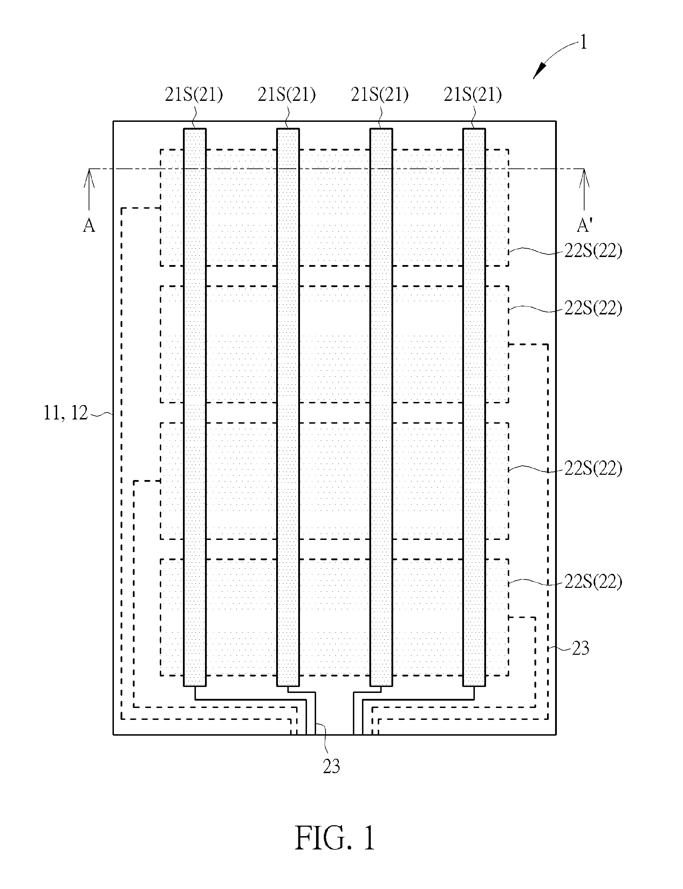

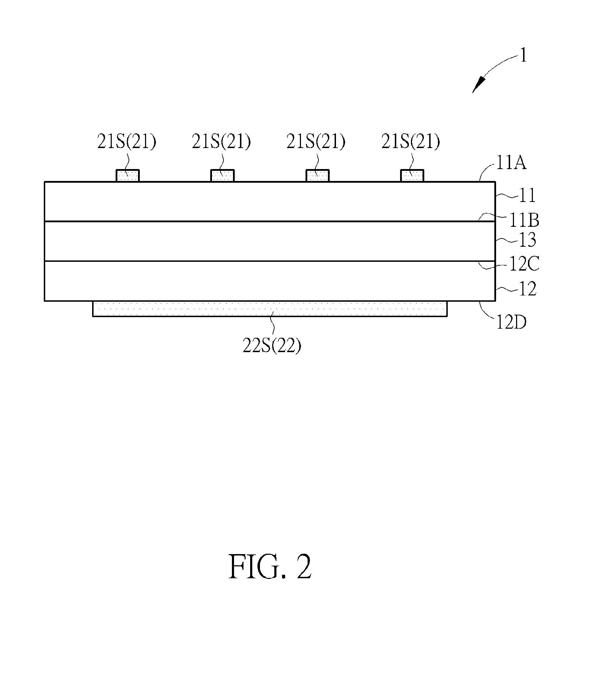

FIGs. 1 and 2 illustrate a touch panel according to the first preferred embodiment of the present invention. FIG. 1 is a schematic top view of the touch panel of the embodiment and FIG. 2 is a schematic cross-sectional view taken along the line A-A' of FIG. 1. As shown in FIGs. 1 and 2, the touch panel 1 includes a first substrate 11, a second substrate 12, an adhesive layer 13, a first patterned sensing electrode layer 21 and a second patterned sensing electrode layer 22. The first substrate 11 has a first surface 11A and a second surface 11B. The first surface 11A and the second surface 11B are opposite to each other. The second substrate 12 has a third surface 12C and a fourth surface 12D. The third surface 12C and the fourth surface 12D are opposite to each other. The second surface 11B of the first substrate 11 faces the third surface 12C of the second substrate 12. The adhesive layer 13 is disposed between the second surface 11B of the first substrate 11 and the third surface 12C of the second substrate 12 for bonding the first substrate 11 and the second substrate 12 together. The first patterned sensing electrode layer 21 is disposed on the first surface 11A of the first substrate. The second patterned sensing electrode layer 22 is disposed on the fourth surface 12D of the second substrate 12. Within the context of the present invention "being disposed on a surface of a substrate" should not be limited to "must being disposed on a surface of a substrate by directly contacting the surface".

In this embodiment, the first substrate 11 and the second substrate 12 each may include a thin type substrate. A thickness of each thin type substrate may be in the range of from 0.05 mm to 0.25 mm, preferably from 0.05 mm to 0.15 mm, or more preferably from 0.05 mm to 0.1 mm. Furthermore, material for the thin type substrate may be selected from those having high visible light transmittance and good chemical resistance and anti-scratch ability. For example, the thin type substrate may be preferably a thin type glass substrate, which has high visible light transmittance and excellent chemical resistance and anti-scratch ability. The thickness of the glass substrate is conventionally greater than 0.4 mm. If reduction of the thickness is attempted, it must be carried out through a thinning process performed on the glass substrate with one side attached on a first carrying substrate, attachment of the other side of thinned glass substrate on a second carrying substrate, removal of the thinned glass substrate from the first carrying substrate, formation of a patterned sensing electrode layer on the surface of the thinned glass substrate, and removal of the thinned glass substrate having the patterned sensing electrode layer formed thereon from the second carrying substrate, as well as formation of another glass substrate having a patterned sensing electrode layer by repeating the aforesaid steps. Accordingly, not only the steps are complicated, but also the process yield is low. Comparatively speaking, the thickness of the thin type glass substrate in the embodiment of the present invention can be in the range of from 0.05 mm to 0.25 mm without performing a thinning process. Accordingly, it is not necessary for the present invention to perform an additional thinning process. Therefore, the fabricating process can be simplified and the process yield can be relatively high. Besides, when the thickness of the thin type glass substrate is in the range of from 0.05 mm to 0.25 mm, the thin type glass substrate may be flexible and can be produced as a roll, such that the application and the fabrication can be relatively convenient. The adhesive layer 13 may include a liquid optical adhesive or a pressure sensitive adhesive (PSA), but is not limited thereto. The adhesive layer 13 may be an entire layer of adhesive disposed between the first substrate 11 and the second substrate 12 so as to substantially not allow an empty space to remain between the first substrate 11 and the second substrate 12. The adhesive layer 13 preferably has a high transmittance with respect to a visible light, and the adhesive layer 13, the first substrate 11, and the second substrate 12 preferably have equal or similar refraction index, so as to reduce deflection and reflection of light to improve optical characteristics of the touch panel 1. It is preferred that each of the first patterned sensing electrode layer 21 and the second patterned sensing electrode layer 22 is a patterned transparent sensing electrode layer. The material may be, for example, indium tin oxide (ITO), indium zinc oxide (IZO), aluminum zinc oxide (AZO), zinc oxide (ZnO), tin oxide, and the like, but is not limited thereto. The first patterned sensing electrode layer 21 and the second patterned sensing electrode layer 22 may form a plurality of capacitance sensing structure to provide a touch input function. The first patterned sensing electrode layer 21 may include a plurality of first sensing electrodes 21S. The second patterned sensing electrode layer 22 may include a plurality of second sensing electrodes 22S. The first sensing electrodes 21S and the second sensing electrodes 22S preferably cross over each other. In this preferred embodiment, the first sensing electrodes 21S and the second sensing electrodes 22S each may be an electrode in a straight shape. As viewed from above, the first sensing electrodes 21S and the second sensing electrodes 22S may cross over each other and be substantially perpendicular to each other but is not limited. The area of the first sensing electrodes 21S overlapping the second sensing electrodes 22S or the line widths thereof may be adjusted in consideration of sensing capacitance, and it is preferred that the area or line width of the second patterned sensing electrode layer 22 is greater than that of the first patterned sensing electrode layer 21, but it is not limited thereto. Each of the first sensing electrodes 21S and the second sensing electrodes 22S is electrically connected to an end of a connecting conductive line 23, such as metal connecting line, and another end of each connecting conductive line 23 is electrically connected to a driving electric circuit (not shown).

In the present invention, because the touch panel 1 includes two layers of patterned sensing electrode layer for a capacitance sensing structure, it has a good touch sensing performance. The first patterned sensing electrode layer 21 and the second patterned sensing electrode layer 22 are formed on the first substrate 11 and the second substrate 12, respectively. The first substrate 11 and the second substrate 12 are bonded together with the adhesive layer 13. Thin type glass substrates are utilized for the first substrate 11 and the second substrate 12. Compared with a conventional glass substrate having a thickness greater than 0. 4 mm, the thin type glass substrate may be relatively thin and have a thickness in a range of from 0.05 mm to 0.25 mm. Accordingly, the overall thickness of the touch panel 1 can be effectively reduced, which can improve capacitance sensing performance. Furthermore, when compared with a plastic substrate, the thin type glass substrate has a relatively high light transmittance, so that the optical characteristics can be improved. Table 1 lists the relative visible light transmittances of glass and some kinds of plastic material.

**Table 1**

| | glass | PC resin | PET | PES |
|---|---|---|---|---|
| Relative visible light transmittance (%) | 100 | 90 | 88 | 90 |

As can be seen from Table 1, the relative visible light transmittance of plastic materials such as polycarbonate (PC), polyethylene terephthalate (PET) or polyethersulfone (PES) may just be as high as up to about 90%, in comparison with the relative visible light transmittance, 100%, of glass. Because the touch panel 1 of the present invention uses the thin type glass substrates, it can meet the requirement for thin type panels for having a relatively good visual clarity. Especially when the touch panel is applied to a touch display panel, the overall thickness of the touch panel 1 can be reduced, so as to minimize the influence of the touch panel on brightness and contrast of the display panel.

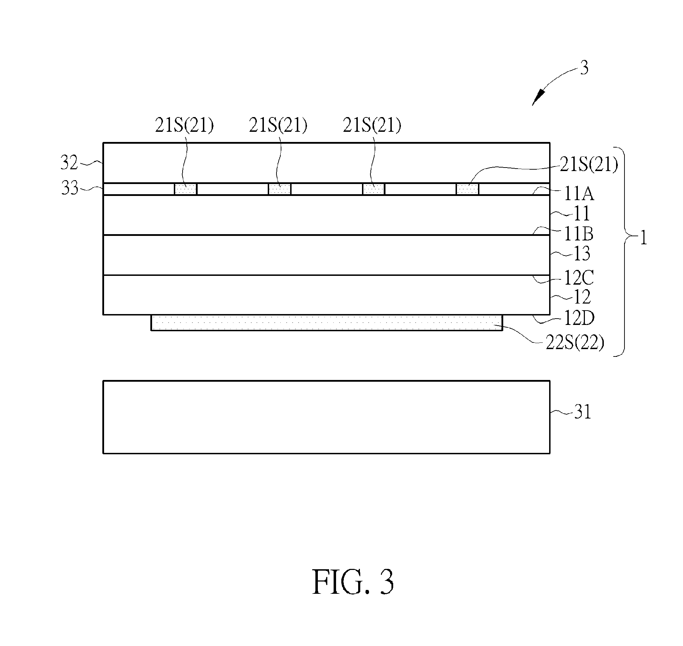

FIG. 3 is a schematic diagram of a touch display panel according to a first preferred embodiment of the present invention. As shown in FIG. 3, the touch display panel 3 according to this embodiment includes a touch panel 1, a display panel 31 and a cover lens 32. The structure of the touch panel 1 may be as the one described in the embodiment shown in FIGs. 1 and 2 and is thus not described herein for conciseness. The display panel 31 is disposed under the second substrate 12 and faces the fourth surface 12D of the second substrate 12. The display panel 31 may be one of display panels of various types, such as liquid crystal display panels, organic electro-luminescence display panels, plasma display panels, field emission display panels, electrophoretic display panels, or other suitable panels. The cover lens 32 is disposed on the first surface 11A of the first substrate 11 and covers the first patterned sensing electrode layer 21. The cover lens 32 is for protecting the touch panel 1 and may be a glass cover lens or a plastic cover lens, but is not limited thereto. In this embodiment, the cover lens 32 and the first substrate 11 may be bonded to each other with an adhesive layer 33. The adhesive layer 33 may include a liquid optical adhesive or a pressure sensitive adhesive, but is not limited thereto. The adhesive layer 33 may be an entire layer of adhesive disposed between the first substrate 11 and the cover lens 32 so as substantially not to allow an empty space to remain between the first substrate 11 and the cover lens 32. Furthermore, the adhesive layer 33 preferably has a high transmittance with respect to a visible light, and the adhesive layer 33, the first substrate 11, and the cover lens 32 preferably have equal or similar refraction index, so as to reduce deflection and reflection of light to improve optical characteristics of the touch display panel 3. In a modified embodiment, the adhesive layer 33 may be a sealant in a frame pattern disposed only on edge portions of the cover lens 32 and the first substrate 11. Furthermore, the area of the second patterned sensing electrode layer 22 is preferably greater than the area of the first patterned sensing electrode layer 21; thereby the second patterned sensing electrode layer 22 has a shielding effect to avoid the signal interference between the display panel 31 and the touch panel.

Since a thin type glass substrate is used in the touch panel 1 of the touch display panel 3 according to the present invention, the touch display panel 3 has a relatively good visual clarity and the capacitance sensing structure has a relatively good capacitance sensing result. Therefore, the touch display panel 3 according to the present invention not only can meet the requirement of thin type touch display panel, but also can provide high brightness and contrast and precise touch sensitivity.

The scope of the touch panel and the touch display panel according to the present invention is not limited to the aforesaid embodiments. The touch panel and the touch display panel according to other preferred embodiments of the present invention will be described hereinafter. In order to compare the differences between the embodiments and to describe briefly, same components are denoted by same numerals, and repeated parts are not redundantly described.

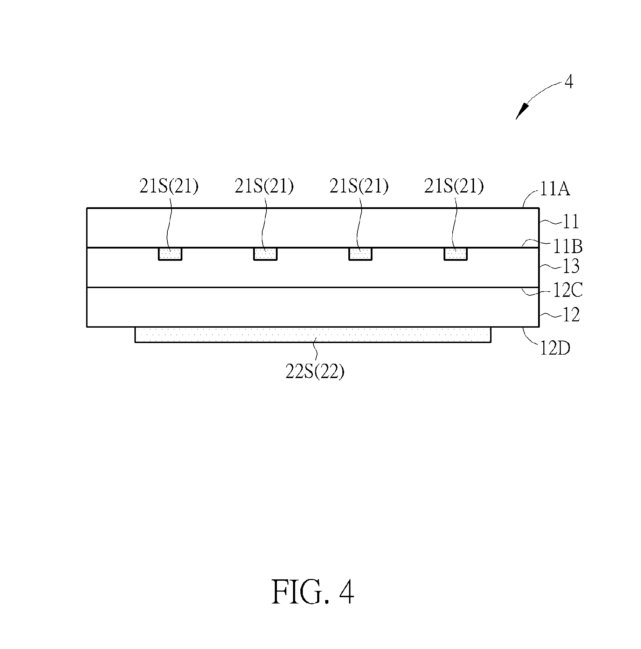

FIG. 4 is a schematic diagram of a touch panel according to a second preferred embodiment of the present invention. As shown in FIG. 4, in the touch panel 4 in this embodiment is different from the first preferred embodiment because the first patterned sensing electrode layer 21 is disposed on the second surface 11B of the first substrate 11, and the second patterned sensing electrode layer 22 is disposed on the fourth surface 12D of the second substrate 12. Comparing this embodiment with the first preferred embodiment, the distance between the first patterned sensing electrode layer 21 and the second patterned sensing electrode layer 22 in this embodiment is relatively short, and, accordingly, in consideration of a same sensing capacitance, the overlap area of the first patterned sensing electrode layer 21 overlapping the second patterned sensing electrode layer 22 or the line width thereof may be less than the overlap area of the first patterned sensing electrode layer 21 overlapping the second patterned sensing electrode layer 22 or the line width thereof in the first preferred embodiment. Within the context of the present invention, "being disposed on a surface of a substrate" should not be limited to "must being disposed on a surface of a substrate by directly contacting the surface".

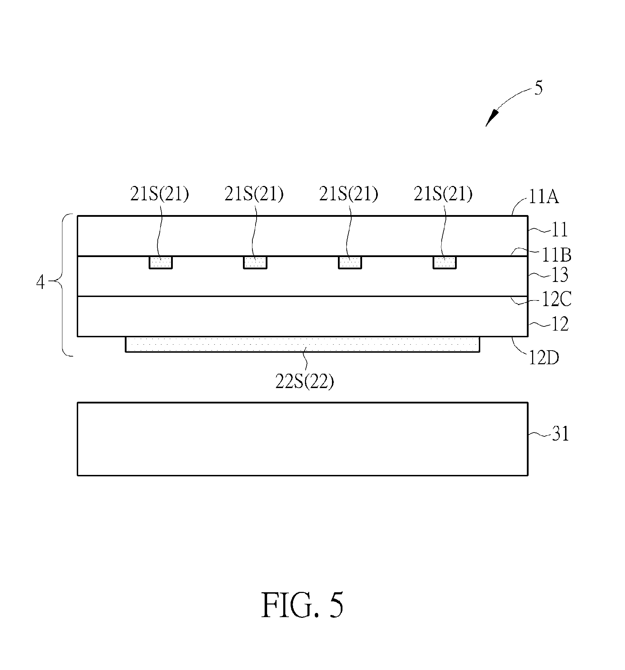

FIG. 5 is a schematic diagram of a touch display panel according to the second preferred embodiment of the present invention. As shown in FIG. 5, the touch display panel 5 in this embodiment includes a touch panel 4 and a display panel 31. The structure of the touch panel 4 may be one as described for the embodiment shown in FIG. 4 and not described redundantly herein for conciseness. The display panel 31 is disposed under the second substrate 12 and faces the fourth surface 12D of the second substrate 12. The first substrate 11 may be also a cover lens in the touch display panel 5 according to this embodiment. The cover lens may be a thin type glass substrate or a substrate of other material; and the second substrate 12 is a thin type glass substrate, so that an additional cover lens is not required.

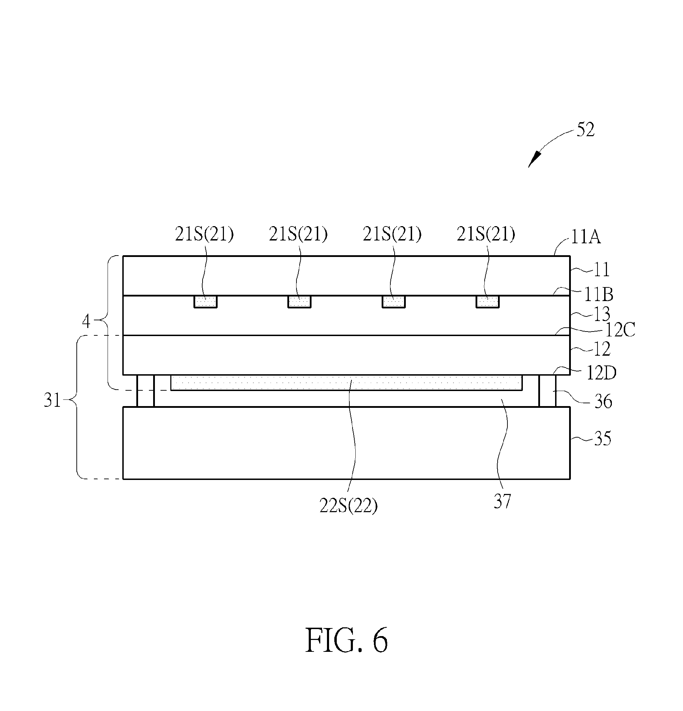

FIG. 6 is a schematic diagram of a touch panel according to a modification of the second preferred embodiment of the present invention. , The touch display panel 52 shown in FIG. 6 in this modification is different from the embodiments shown in FIG. 5 that the second substrate 12 may further serve as a substrate of the display panel 31, so that the touch panel 4 and the display panel 31 are integrated together. The second substrate 12 may serve as, for example, a color filter substrate, an array substrate or an encapsulated plate, so as to integrate the touch panel 4 and the display panel 31 for the device to be lighter and thinner. On the other hand, the display panel 31 may further include another substrate 35, an adhesive layer 36 and a display media layer 37. The adhesive layer 36 bonds the substrate 35 and the second substrate 12 together. The display media layer 37 is disposed between the substrate 35 and the second substrate 12. For example, the display media layer 37 may be a liquid crystal layer, the second substrate 12 may be a color filter substrate, and the substrate 35 may be an array substrate; or, the display media layer 37 may be an organic electroluminescent layer, the second substrate 12 may be an encapsulated plate, and the substrate 35 may be an array substrate.

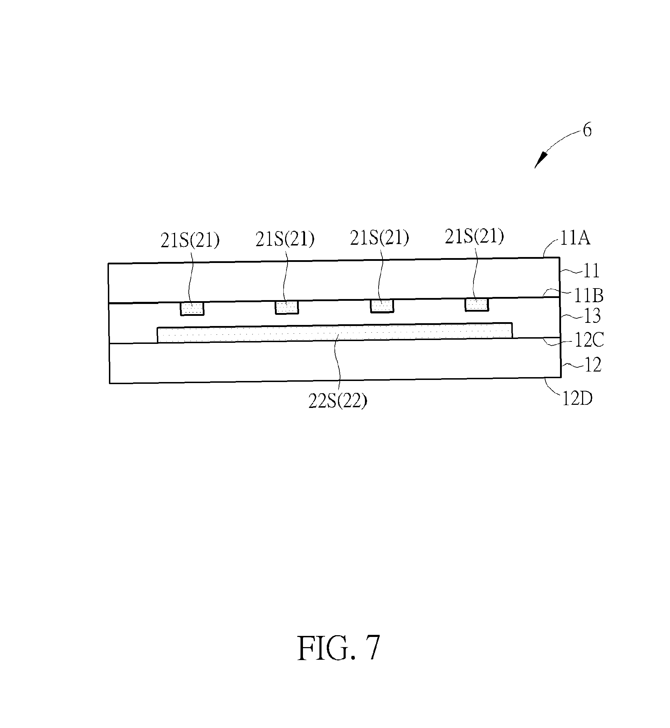

FIG. 7 is a schematic diagram of a touch panel according to a third preferred embodiment of the present invention. As shown in FIG. 7, in the touch panel 6 in this embodiment, it is different from the first and the second preferred embodiments that the first patterned sensing electrode layer 21 is disposed on the second surface 11B of the first substrate 11, and the second patterned sensing electrode layer 22 is disposed on the third surface 12C of the second substrate 12. Comparing this embodiment with the first and the second preferred embodiments, the distance between the first patterned sensing electrode layer 21 and the second patterned sensing electrode layer 22 in this embodiment is relatively short, and, accordingly, in consideration of a same sensing capacitance, the overlap area of the first patterned sensing electrode layer 21 overlapping the second patterned sensing electrode layer 22 or the line width thereof may be less than the overlap area of the first patterned sensing electrode layer 21 overlapping the second patterned sensing electrode layer 22 or the line width thereof in the first and the second preferred embodiments. Within the context of the present invention, "being disposed on a surface of a substrate" should not be limited to "must being disposed on a surface of a substrate by directly contacting the surface".

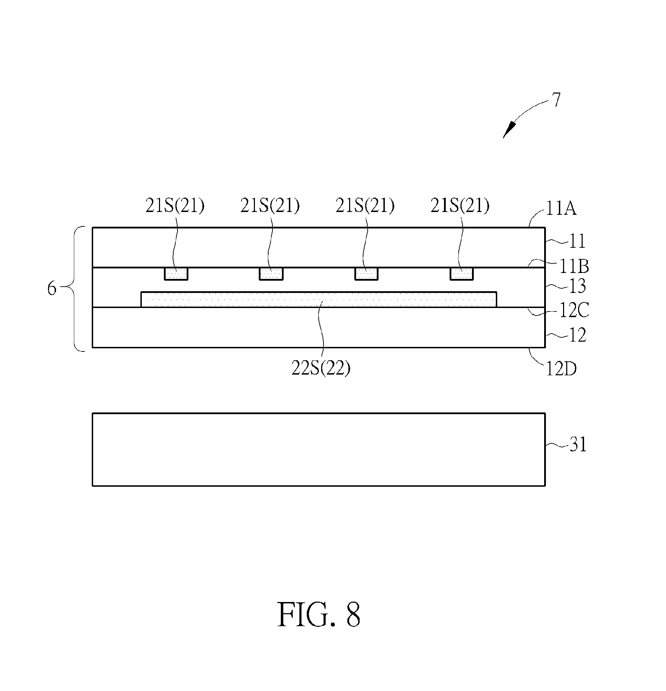

FIG. 8 is a schematic diagram of a touch display panel according to a third preferred embodiment of the present invention. As shown in FIG. 8, the touch display panel 7 in this embodiment includes a touch panel 6 and a display panel 31. The structure of the touch panel 6 may be one as described for the embodiment shown in FIG. 7 and not described herein for conciseness. The display panel 31 is disposed under the second substrate 12 and faces the fourth surface 12D of the second substrate 12. It is noted that in the touch display panel 7 according to this embodiment, the first substrate 11 may be also a cover lens. The cover lens may be a thin type glass substrate or a substrate of other material; and the second substrate 12 is a thin type glass substrate so that an additional cover lens is not required.

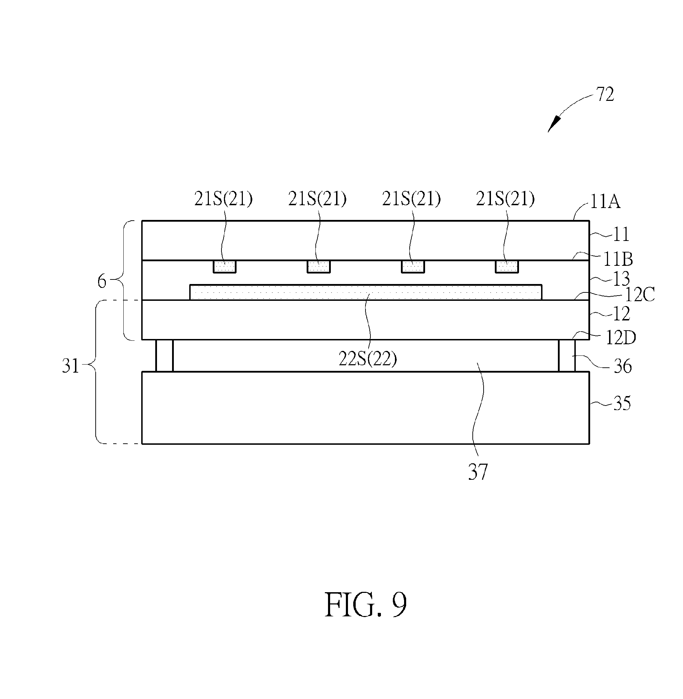

FIG. 9 is a schematic diagram of a touch panel according to a modification of the third preferred embodiment of the present invention. As shown in FIG. 9, the touch display panel 72 in this modification is different from the embodiments shown in FIG. 8 that the second substrate 12 may further serve as a substrate of the display panel 31, so that the touch panel 6 and the display panel 31 are integrated together. The second substrate 12 may serve as, for example, a color filter substrate, an array substrate or an encapsulated plate, so as to integrate the touch panel 6 and the display panel 31 for the device to be lighter and thinner. On the other hand, the display panel 31 may further include another substrate 35, an adhesive layer 36 and a display media layer 37. The adhesive layer 36 bonds the substrate 35 and the second substrate 12 together. The display media layer 37 is disposed between the substrate 35 and the second substrate 12. For example, the display media layer 37 may be a liquid crystal layer, the second substrate 12 may be a color filter substrate, and the substrate 35 may be an array substrate; or, the display media layer 37 may be an organic electroluminescent layer, the second substrate 12 may be an encapsulated plate, and the substrate 35 may be an array substrate.

The pattern of the first patterned sensing electrode layer and the second patterned sensing electrode layer in the present invention is not limited to a straight shape and can be in another shape.

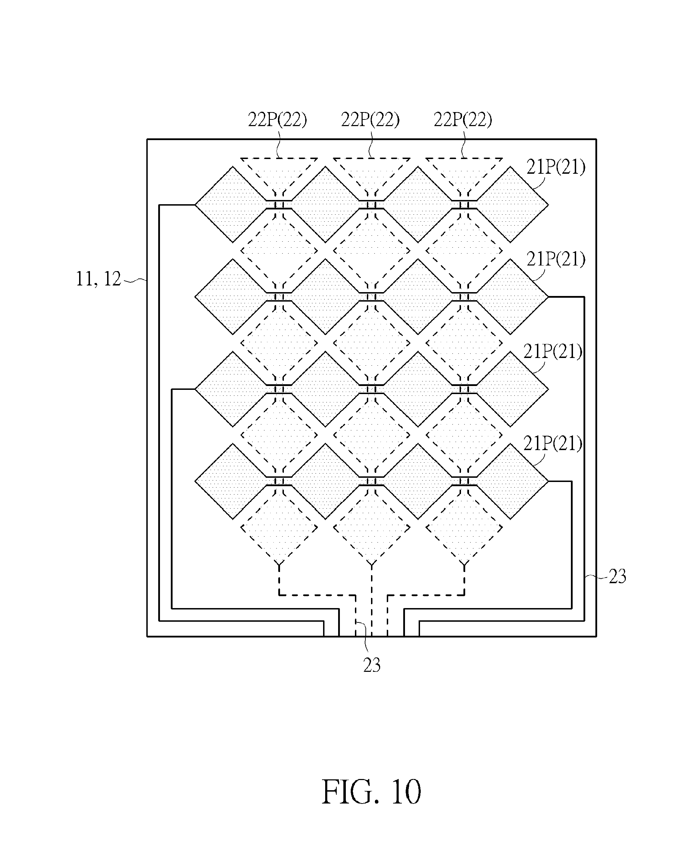

FIG. 10 is a schematic diagram of the first patterned sensing electrode layer and the second patterned sensing electrode layer according to a modified embodiment of the present invention. As shown in FIG. 10, in this modified embodiment, the first patterned sensing electrode layer 21 includes a plurality of first sensing pads 21P, and the second patterned sensing electrode layer 22 includes a plurality of second sensing pads 22P. A portion of the first sensing pads 21P are connected in series with each other, and a portion of the second sensing pads 22P are connected in series with each other. The first sensing pads 21P and the second sensing pads 22P may include for example rhombus-shaped sensing pads, but are not limited thereto and can be other shapes. The first sensing pads 21P of the first patterned sensing electrode layer 21 and the second sensing pads 22P of the second patterned sensing electrode layer 22 in this modified embodiment may be also applicable to any aforesaid embodiment to substitute the first sensing electrode 21S of the first patterned sensing electrode layer 21 and the second sensing electrode 22S of the second patterned sensing electrode layer 22 respectively.

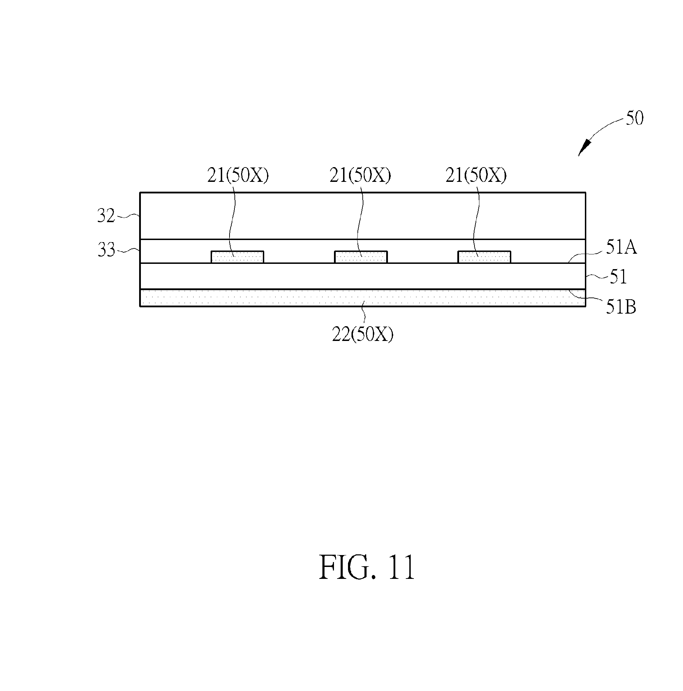

FIG. 11 is a schematic diagram of a touch panel according to the fourth preferred embodiment of the present invention. As shown in FIG. 11, it is different from the aforesaid embodiments that the touch panel 50 in this embodiment may only include a substrate 51. The substrate 51 has a first surface 51A and a second surface 51B, and the substrate 51 includes a thin type glass substrate. The thickness of the thin type glass substrate is between 0.05 mm and 0.25 mm, but is not limited thereto. In other words, in this embodiment, only one substrate 51 is required to be disposed, and a second substrate is not required, and, accordingly, the amount of substrate to be disposed in the touch panel can be reduced. Furthermore, the touch panel 50 in this embodiment may further include a sensing element 50X, and the sensing element 50X may include a first patterned sensing electrode layer 21 disposed on the first surface 51A of the substrate 51 and a second patterned sensing electrode layer 22 disposed on the second surface 51B of the substrate 51. An adhesive layer 33 is disposed between the cover lens 32 and the first surface 51A of the substrate 51 to bond the first surface 51A of the substrate 51 and the cover lens 32. Since it does not need to include the second substrate in this embodiment, the overall thickness of the touch panel 50 can be efficiently decreased to achieve a thinner device. In the above description, the meaning relating to "being disposed on a surface of a substrate" should not be limited to "must being disposed on a surface of a substrate by directly contacting the surface".

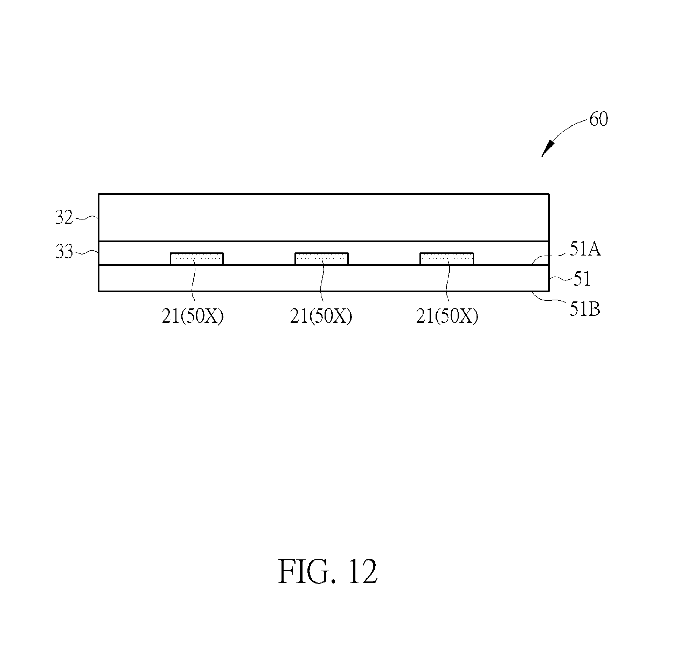

FIG. 12 is a schematic diagram of a touch panel according to a modification of the fourth preferred embodiment of the present invention. As shown in FIG. 12, it is different from the embodiment shown in FIG. 11 because the touch panel 60 not only does not require a second substrate, but also a second patterned sensing electrode layer is not required. In this modified embodiment, the sensing element 50X may include only one first patterned sensing electrode layer 21 disposed on the first surface 51A of the substrate 51. Furthermore, an adhesive layer 33 is disposed between the cover lens 32 and the first surface 51A of the substrate 51 to bond the first surface 51A of the substrate 51 and the cover lens 32 together. In the above description, the meaning relating to "being disposed on a surface of a substrate" should not be limited to "must being disposed on a surface of a substrate by directly contacting the surface".

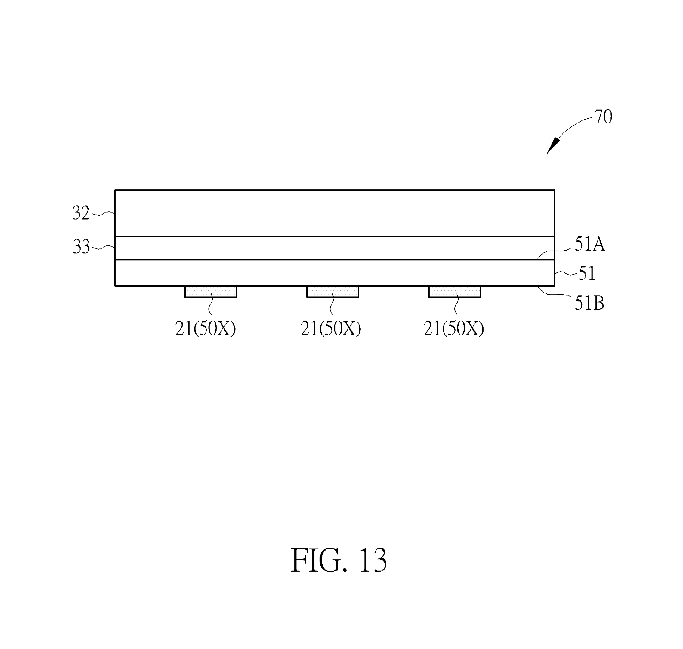

FIG. 13 is a schematic diagram of a touch panel according to another modification of the fourth preferred embodiment of the present invention. As shown in FIG. 13, it is different from the embodiment shown in FIG.9A because the touch panel 70 not only does not require a second substrate, but also a second patterned sensing electrode layer is not required. This modified embodiment is different from the embodiment shown in FIG. 12 because the sensing element 50X may include only one first patterned sensing electrode layer 21 disposed on the second surface 51B of the substrate 51. Furthermore, an adhesive layer 33 is disposed between the cover lens 32 and the first surface 51A of the substrate 51 to bond the first surface 51A of the substrate 51 and the cover lens 32 together. In the above description, the meaning relating to "being disposed on a surface of a substrate" should not be limited to "must being disposed on a surface of a substrate by directly contacting the surface".

Furthermore, the substrate 51 in the embodiments as shown in FIGs. 11, 12 and 13 as described above may also serve as a substrate of a display panel, and the touch panel and the display panel may be integrated together. The substrate 51 may serve as, for example, a color filter substrate, an array substrate or an encapsulated plate, so as to integrate the touch panel and the display panel together for the device to be lighter and thinner. The display panel may be, for example, a liquid crystal display panel, an organic electroluminescence display panel, a plasma display panel, a field-emitting display panel, an electro-phoretic display panel or the like.

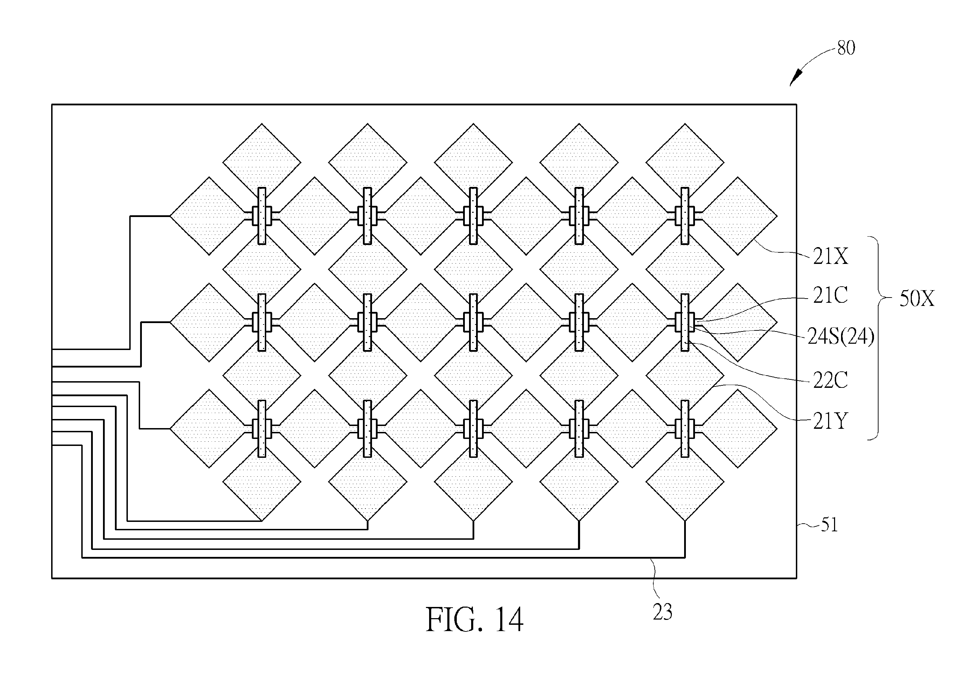

FIG. 14 is a schematic diagram of a touch panel according to the fifth preferred embodiment of the present invention. As shown in FIG. 14, in this embodiment, the sensing element 50X of the touch panel 80 includes a plurality of first sensing pads 21X, a plurality of second sensing pads 21Y, a plurality of connection parts 21C, a plurality of bridge parts 22C, and an insulation layer 24. Each connection part 21C connects two adjacent first sensing pads 21X, and each bridge part connects two adjacent second sensing pads 21Y. The first sensing pad 21X and the second sensing pad 21Y adjacent each other are disposed in a way so as to be electrically isolated from each other. In this embodiment, the first sensing pad 21X and the second sensing pad 21Y adjacent each other are disposed by means of the insulation layer 24 so as to be electrically isolated from each other. The insulation layer 24 may include an inorganic insulation layer, such as silicon oxide, silicon nitride, silicon oxynitride, and the like, or organic insulation layer, such as epoxy resin, but be not limited thereto. The insulation layer 24 may include for example a plurality of island-shaped insulation structures 24S disposed between the bridge parts 22C and the connection parts 21C, but be not limited thereto. In other embodiments, the insulation layer 24 may be a striped insulation structure or a whole layer to cover the touch region. In this design, the fringing effect between the first sensing pads 21X and the second sensing pads 21Y can be utilized to carry out touch sensing. In this embodiment, the first sensing pads 21X, the second sensing pads 21Y and the connection parts 21C may be formed utilizing a patterned sensing electrode layer, such as the first patterned sensing electrode layer, since those are at a same layer; and the bridge parts 22C may be formed utilizing another patterned sensing electrode layer, such as the second patterned sensing electrode layer, at another layer, but is not limited thereto. Furthermore, the sensing element 50X may be disposed on any surface of the substrate 51. The first sensing pads 21X and the second sensing pads 21Y may be electrically connected to an end of a connecting conductive line 23, such as a metal connecting line, respectively, and another end of the connecting conductive line 23 may be electrically connected to a driving electric circuit (not shown).

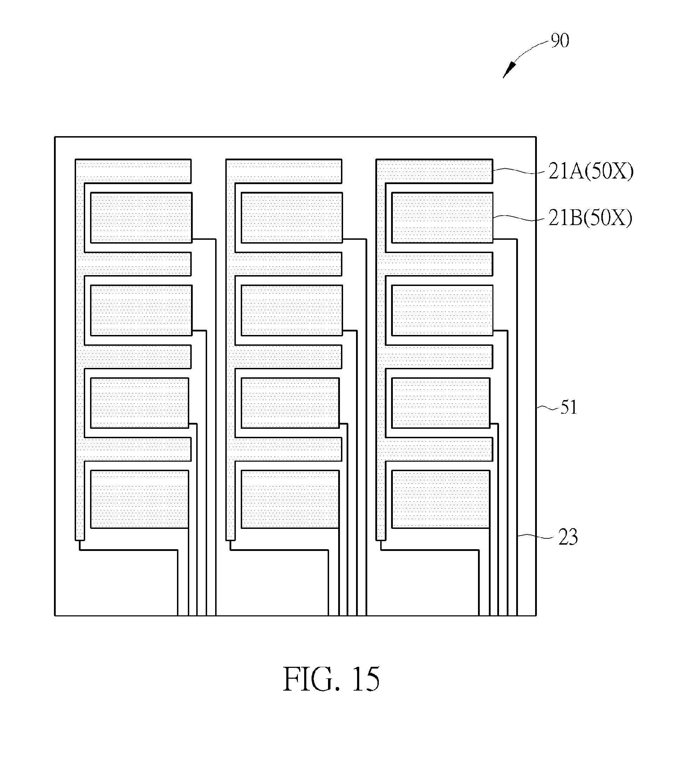

FIG. 15 is a schematic diagram of a touch panel according to the sixth preferred embodiment of the present invention. As shown in FIG. 15, in this embodiment, the sensing element 50X of the touch panel 90 includes a plurality of sensing electrodes 21A and a plurality of sensing pads 21B. Each sensing electrode 21A and each sensing pad 21B are disposed in a way so as to be electrically isolated from each other. In this design, the fringing effect between the sensing electrodes 21A and the sensing pads 21B can be utilized to carry out touch sensing. In this embodiment, a second patterned sensing electrode layer is not required, and, accordingly, after a patterned sensing electrode layer is formed at one side, it does not need to turn over the substrate 51 to repeat a procedure for forming another patterned sensing electrode layer at another side. As a result, the fabrication can be simplified. The sensing electrodes 21A and the sensing pads 21B may be formed utilizing a patterned sensing electrode layer, but are not limited thereto. The sensing element 50X may be disposed on any surface of the substrate 51. The sensing electrodes 21A and the sensing pads 21B may be electrically connected to an end of a connecting conductive line 23, such as a metal connecting line, respectively, and another end of the connecting conductive line 23 may be electrically connected to a driving electric circuit (not shown).

In conclusion, the touch panel and the touch display panel according to the present invention use a thin type glass substrate having a thickness only in a range from 0.05 mm to 0.25 mm, and accordingly the overall thickness of the touch panel or the touch display panel can be effectively minimized to meet the requirements for thinning, as well as have improved optical properties and be durable due to the superior light transmittance, chemical resistance, and anti-scratch ability possessed by the thin type glass substrates as compared with other substrates such as plastic substrates.

## Claims

1. A touch panel (1, 4, 6, 80), **characterized by**:
a first substrate (11) having a first surface (11A) and a second surface (11B);
a second substrate (12) having a third surface (12C) and a fourth surface (12D), wherein the second surface (11B) of the first substrate (11) faces the third surface (12C) of the second substrate (12);
an adhesive layer (13) disposed between the second surface (11B) of the first substrate (11) and the third surface (12C) of the second substrate (12) to bond the first substrate (11) and the second substrate (12);
a first patterned sensing electrode layer (21) disposed on the first substrate (11); and
a second patterned sensing electrode layer (22) disposed on the second substrate (12).

2. The touch panel (1, 4, 6, 80) of claim 1, further **characterized in that** at least one of the first substrate (11) and the second substrate (12) is a thin type glass substrate, and the thin type glass substrate has a thickness in a range of from 0.05 millimeters to 0.25 millimeters.

3. The touch panel (1, 4, 6, 80) of claim 2, further **characterized in that** the first substrate (11) and the second substrate (12) each comprise a thin type glass substrate, and the thin type glass substrate has a thickness in a range of from 0.05 millimeters to 0.25 millimeters.

4. The touch panel (1, 4, 6, 80) of claims 1-3, further **characterized in that** the adhesive layer (13) comprises a liquid optical adhesive or a pressure sensitive adhesive.

5. The touch panel (1, 4, 6, 80) of claims 1-4, further **characterized in that** the first patterned sensing electrode layer (21) comprises a plurality of first sensing electrodes (21S, 21P) and the second patterned sensing electrode layer (22) comprises a plurality of second sensing electrodes (22S, 22P), wherein the first sensing electrodes (21S, 21P) and the second sensing electrodes (22S, 22P) cross over each other.

6. A touch display panel (3, 5, 52, 7, 72) comprising the touch panel of claim 1, and a display panel (31), wherein the display panel (31) facing the fourth surface (12D) of the second substrate (12) and the adhesive layer (13) is disposed between the first substrate (11) and the display panel (31).

7. The touch display panel (3) of claim 6, further **characterized in that** the first patterned sensing electrode layer (21) is disposed on the first surface (11A) of the first substrate (11), and the second patterned sensing electrode layer (22) is disposed on the fourth surface (12D) of the second substrate (12).

8. The touch display panel (3) of claim 7, further **characterized by** a cover lens (32) disposed on the first surface (11A) of the first substrate (11) and covering the first patterned sensing electrode layer (21).

9. The touch display panel (3) of claims 6-8, further **characterized by** the first surface (11A) of the first substrate (11) being a touch sensing face.

10. The touch display panel (3) of claims 6-9, further **characterized in that** the second patterned sensing electrode layer (22) occupies a larger area than the first patterned sensing electrode layer (21).

11. The touch display panel (5, 52) of claim 6, further **characterized in that** the first patterned sensing electrode layer (21) is disposed on the second surface (11B) of the first substrate (11), and the second patterned sensing electrode layer (22) is disposed on the fourth surface (12D) of the second substrate (12).

12. The touch display panel (7, 72) of claim 6, further **characterized in that** the first patterned sensing electrode layer (21) is disposed on the second surface (11B) of the first substrate (11), and the second patterned sensing electrode layer (22) is disposed on the third surface (12C) of the second substrate (12).

13. The touch display panel (5, 7, 52, 72) of claims 11 and 12, further **characterized in that** the first substrate (11) is a cover lens.

14. The touch display panel (52, 72) of claims 11 and 12, further **characterized in that** the second substrate (12) is a substrate of a display panel (31).

15. The touch display panel (3, 5, 52, 7, 72) of claim 6, further **characterized in that** the first patterned sensing electrode layer (21) comprises a plurality of first sensing electrodes (21S, 21P), the second patterned sensing electrode layer (22) comprises a plurality of second sensing electrodes (22S, 22P), and the first sensing electrodes (21S, 21P) and the second sensing electrodes (22S, 22P) cross over each other.

16. A touch panel (50, 60, 70, 80, 90), **characterized by**:
a substrate (51) having a first surface (51A) and a second surface (51B), the substrate (51) comprises a thin type glass substrate (51), and the thin type glass substrate (51) has a thickness in a range of from 0.05 millimeters to 0.25 millimeters;
a cover lens (32) disposed on the first surface (51A) of the substrate (51);
an adhesive layer (33) disposed between the first surface (51A) of the substrate (51) and the cover lens (32) to bond the substrate (51) and the cover lens (32); and
a sensing element (50X) disposed on the substrate (51).

17. The touch panel (50, 60, 80, 90) of claim 16, further **characterized in that** the sensing element (50X) is disposed on the first surface (51A) of the substrate (51).

18. The touch panel (50, 70, 80, 90) of claim 16, further **characterized in that** the sensing element (50X) is disposed on the second surface (51B) of the substrate (51).

19. The touch panel (80) of claim 16, further **characterized in that** the sensing element (50X) comprises a plurality of first sensing pads (21X), a plurality of second sensing pads (21Y), a plurality of connection parts (21C), and a plurality of bridge parts (22C), each of the connection parts (21C) connects adjacent two of the first sensing pads (21X), each of the bridge parts (22C) connects adjacent two of the second sensing pads (21Y), and adjacent one of the first sensing pads (22X) and one of the second sensing pads (22Y) are electrically isolated from each other.

20. The touch panel (80) of claim 19, further **characterized by** comprising an insulation layer (24) disposed between the bridge part (22C) and the connection part (21C).

21. The touch panel (90) of claim 16, further **characterized in that** the sensing element (50X) comprises a plurality of sensing electrodes (21A) and a plurality of sensing pads (21B) and each of the sensing electrodes (21A) and each of the sensing pads (21B) are electrically isolated from each other.

22. The touch panel (50) of claim 16, further **characterized in that** the sensing element (50X) comprises a first patterned sensing electrode layer (21) disposed on the first surface (51A) of the substrate (51) and a second patterned sensing electrode layer (22) disposed on the second surface (51B) of the substrate (51).

23. The touch panel (50, 60, 70, 80, 90) of claim 16, further **characterized in that** the substrate is a substrate of a display panel.

24. The touch panel (50, 60, 70, 80, 90) of claim 16, further **characterized in that** the substrate is a color filter substrate of a display panel.

25. The touch panel (50, 60, 70, 80, 90) of claim 16, further **characterized in that** the substrate is an array substrate of a display panel.

26. The touch panel (50, 60, 70, 80, 90) of claim 16, further **characterized in that** the substrate is an encapsulated plate of a display panel.
